# EUROPÄISCHE PATENTSCHRIFT

(11) **EP 1 131 627 B1**
(45) Veröffentlichungstag und Bekanntmachung des Hinweises auf die Patenterteilung: **19.04.2006**
(21) Anmeldenummer: 99958185.3
(22) Anmeldetag: 22.11.1999
(51) Int. Cl.: G01N 30/46, B01D 15/08

(54) **VORRICHTUNG UND VERFAHREN ZUR PARALLELEN FLÜSSIGCHROMATOGRAPHISCHEN TRENNUNG VON SUBSTANZEN**
DEVICE AND METHOD FOR THE PARALLEL SEPARATION OF SUBSTANCES BY LIQUID CHROMATOGRAPHY
DISPOSITIF ET PROCEDE DE SEPARATION PARALLELE DE SUBSTANCES PAR CHROMATOGRAPHIQUE LIQUIDE

(30) Priorität: 20.11.1998 DE 19855001; 14.06.1999 DE 29910725 U
(43) Veröffentlichungstag der Anmeldung: 12.09.2001
(73) Patentinhaber: SEPIAtec GmbH, 12487 Berlin (DE)
(72) Erfinder: MÜLLER-KUHRT, Lutz, D-14089 Berlin (DE); GOD, Ralf;, D-14167 Berlin; (DE); GUMM, Holger, D-13503 Berlin (DE); BINKELE, Jörg, D-14469 Potsdam (DE)
(74) Vertreter: Gulde, Klaus W.
(86) Internationale Anmeldenummer: PCT/EP1999/009747
(87) Internationale Veröffentlichungsnummer: WO 2000/031528

(56) Entgegenhaltungen:
- EP-A- 0 275 933
- DE-A- 19 641 210
- US-A- 3 922 223
- US-A- 5 198 115

## Beschreibung

Die Erfindung bezieht sich auf eine Vorrichtung und ein Verfahren zur flüssigchromatographischen Trennung von Substanzen unter Druck gemäß den Oberbegriffen der Ansprüche 1 und 16.

Zur präparativen und analytischen Trennung von Substanzgemischen werden sog. chromatographische Trennanlagen verwendet. Diese bestehen im wesentlichen aus jeweils einer Fördereinheit (Pumpe), einem Injektionssystem, der eigentlichen Trennvorrichtung (Säule) und einem Detektor. Die Auftrennung von aus organischen Bestandteilen bestehenden Stoffgemischen wird derzeit durch die Hochdruckflüssigchromatographie dominiert. Die Gründe sind im wesentlichen in der Anwendungsbreite und Universalität sowie der Robustheit und Anwenderfreundlichkeit der Methode zu sehen. Mittels der Hochdruckflüssigchromatographie ist es möglich, praktisch jedes organische Substanzgemisch aufzutrennen und zu detektieren. Neben der Analyse von Einzelproben, bei der die Trennparameter optimal und entsprechend variierbar sein sollen, müssen mit zunehmender Tendenz in vielen Bereichen große Probenserien unter exakt den gleichen Bedingungen analysiert oder aufgereinigt werden. Dabei ist vor allem für den analytischen Bedarf häufig eine exakte Vergleichbarkeit der Chromatogramme und eine eindeutige Identifikation von getrennten Substanzen anhand der Retentionszeiten im Chromatogramm erforderlich. Nicht zu vermeidende Unterschiede in der Art der Befüllung der Chromatographiesäulen mit stationären Phasenmaterial, z. B. in der Füllhöhe oder in der Packungsdichte, können jedoch zu unterschiedlichen Retentionszeiten führen, so daß eine exakte Vergleichbarkeit der Chromatogramme nicht mehr gegeben ist.

Bisher werden für analytische und präparative Zwecke jeweils einzelne chromatographische Trennanlagen für die Trennung einzelner Substanzgemische verwendet. Die Suche nach pharmazeutisch verwertbaren Naturstoffen und die Synthese ganzer Substanzbibliotheken mittels kombinatorischer Chemie hat in neuerer Zeit allerdings zu erhöhten Anforderungen an den Probendurchsatz bei flüssigchromatograhischen Anlagen geführt.
So ist es bekannterweise möglich, über serielle Analysen oder Aufreinigung von Proben, Probenserien nacheinander zu bearbeiten. Dieses Vorgehen jedoch ist sehr zeitaufwendig und führt zu langen Zeiträumen zwischen der Prozessierung der ersten und der letzten Probe. Nachteiligerweise kann bei der Durchführung der flüssigchromatographischen Trennungen über längere Zeiträume die Konstanz der Bedingungen nicht garantiert werden, da sich unter anderem Proben, Säulenmaterialien und Lösungsmittel verändern.

Um eine große Zahl von Proben zu analysieren (sog. "high throughput screening"), ist es deshalb wünschenswert, eine größere Zahl von Trennungen gleichzeitig durchführen zu können. Derzeitige parallelisierte Trennanlagen benötigen je eine Fördereinrichtung pro Trennvorrichtung (Säule). Dies ist jedoch in der Regel unökonomisch. Darüberhinaus zeigen solche Mehrkanalanlagen in den einzelnen Förderlinien voneinander abweichende Retentionszeiten.

Es sind Hochdruckchromatographieanlagen bekannt, bei denen mit insgesamt sieben Pumpen, einem Säulenkarussel mit sechzehn Säulen, vier einzelnen Detektoren und einem Fraktionssammler maximal vier Proben parallel bearbeitet werden können (Laborpraxis, Dezember 1967, Seite 61-63). Hinzu kommt, daß aufgrund ihrer aufwendigen Konstruktion im Vergleich zu der geringen zu bearbeitenden Probenzahl ein ökonomisches Arbeiten nicht gestattet ist.

Eine weitere Anlage ist bekannt, mit der sich maximal ebenfalls vier Proben parallel bearbeiten lassen (Laboratory Automation News, Vol. 2, No. 2, Mai 1997). Hier betreiben vier Pumpen vier Säulen. Substanzen werden in einem UV-Detektor, der eine Deuteriumlampe und vier Flusszellen aufweist, bei nur zwei vor der Analyse einstellbaren Wellenlängen detektiert. Die Peakerkennung im Detektor schaltet vier Fraktionssammler. Im Prinzip werden hier im wesentlichen mehrere Hochdruckflüssigchromatographiegeräte parallel eingesetzt. Das ist nachteiligerweise unökonomisch.

Eine wesentliche Steigerung der Zahl der Förderlinien ist erreichbar, wenn mehrere Kanäle im Parallelbetrieb von einer einzigen konstant fördernden Pumpe (bzw. Pumpensystem) versorgt werden und eine seitens des Anwenders vorgegebene Flussverteilung entsteht. Eine solche Anordnung ist aus der US-A-5.198.115 bekannt.

Die Durchflußrate der mobilen Phase kann hier mittels Flussmessern registriert werden. Sie dient jedoch lediglich der Durchflusskontrolle und nicht zur Beeinflussung der Stömungswiderstände in den einzelnen Trennungslinien.

Ein einfache, ungeregelte Parallelschaltung mehrerer Trennsäulen, die durch eine einzige Pumpe versorgt werden, führt jedoch aufgrund der unterschiedlichen Strömungsverhältnisse in den einzelnen Säulen zu einer Flussverteilung, die nur sehr schwer vorhersehbar ist. Jede Säule muß vor Inbetriebnahme strömungstechnisch vermessen werden und einen Strömungswiderstandskennwert erhalten.
Analog zu einem parallelen Widerstandsnetzwerk in der Elektrotechnik würde man mit einem solchen Kennwert auch hier eine entsprechende Verteilung des Volumenstromes erwarten können. Dieses Verfahren der Flusseinstellung im parallelen Betrieb ist in der Praxis unbrauchbar, da es keinerlei zeitliche Veränderungen (z.B. Alterungs- u. Verstopfungsprozesse im Säulenmaterial) berücksichtigt.

In DE 195 45 423 A1 ist eine Vorrichtung beschrieben, mit der bis zu zweiundsiebzig parallele Trennungen möglich sein sollen. Die Vorrichtung basiert auf zwei miteinander verbundenen kreis- und scheibenförmigen Trennphasen. Der Strom der mobilen Phase kehrt sich bei dieser Vorrichtung um. Für parallele Messungen sollen diese Scheiben mit undurchlässigen Trennwänden versehen sein. Die Detektion soll in einem nicht näher beschriebenen Vielkanaldetektor erfolgen. Die Trennphase wird über zwei Pumpen und einem Ventilbaum mit mobiler Phase und Proben versorgt. Diese Vorrichtung weist zwei kritische Punkte auf:
- Es wird nicht näher beschrieben, wie die Flüsse in den verschiedenen Kanälen bei parallelem Betrieb der Trennsäulen geregelt werden sollen. Verstopft beispielsweise ein Kanal, so würde sich in der dargestellten Vorrichtung ohne Regelung automatisch der Fluss in den anderen Kanälen erhöhen.
- Ebenso ist es fraglich, ob sich die Trennwände auf den Scheiben bei höheren Drücken noch als dicht erweisen. Eine Vermischung verschiedener Proben kann deshalb hier nicht ausgeschlossen werden.

Der Erfindung liegt die Aufgabe zugrunde, eine Vorrichtung und ein Verfahren zur flüssigchromatographischen Trennung unter Druck anzubieten, mit denen eine parallele Auftrennung und Detektion sowie eine Aufreinigung, wenn erforderlich, von mindestens mehreren Proben möglich ist, wobei die Vorrichtung eine kompakte, kostensparende Konstruktion aufweisen soll.

Die Lösung der Aufgabe erfolgt mit den kennzeichnenden Teilen der Ansprüche 1 und 16.

Vorteilhafte Weiterbildungen sind in den Unteransprüchen aufgeführt.
Die Erfindung weist verschiedene Vorteile auf. Pro Zeiteinheit können bedeutend mehr Proben parallel getrennt, analysiert und aufgereinigt werden. In der gleichen Zeit, in der eine herkömmliche Hochdruckflüssigchromatographieanlage nur eine Probe oder eine der oben beschriebenen Parallelchromatographievorrichungen vier Proben auftrennen, kann die erfindungsgemäße Vorrichtung fünf oder bedeutend mehr Proben auftrennen, analysieren und aufreinigen. Vorteilhafterweise ist bei der erfindungsgemäßen Vorrichtung jede Trennungslinie einschließlich der Trennsäulen physikalisch von der anderen getrennt, so daß eine Vermischung der Proben nicht stattfinden kann. Für den Betrieb mit Niederdruckgradient werden selbst bei einem Parallelbetrieb von wesentlich mehr als fünf Trennsäulen nur eine Pumpe oder für den Hochdruckgradienten maximal zwei Pumpen und für das Betreiben der Festphasenextraktionseinheit ebenfalls nur zwei Pumpen benötigt. Dies spart Raum und Kosten. Da für die Probeninjektion Mehrwegventile parallel geschaltet werden, wird nur eine Ventilsteuerung benötigt. Eine solche parallel betriebene Chromatographievorrichtung kann günstigerweise mit einem einzelnen Multikanaldetektor, anstelle von vielen einzelnen Detektoren ausgestattet werden. Schließlich sind die Chromatogramme der einzelnen Trennungslinien durch den Einbau einer kalibrierbaren Flussregelung absolut miteinander vergleichbar.

Die Erfindung wird anhand von Zeichnungen und Ausführungsbeispielen näher erläutert.

Es zeigen
- Fig. 1A: ein Ablaufschema mit acht Trennungslinien sowie einer Anordnungsvariante der Flussregelungseinheit,
- Fig. 1B: ein Ablaufschema mit einer weiteren Anordnungsvariante der Flussregelungseinheit,
- Fig. 2: ein Diagramm zur Wirkungsweise der Flussregelung und
- Fig. 3: eine schematische perspektivische Darstellung der Vorrichtung mit 96 Trennungslinien,
- Fig. 4: eine schematische Darstellung der Vorrichtung mit zehn Festphasenextraktionseinheiten, die je sechs Fraktioniersäulen aufweisen und
- Fig. 5: eine schematische Darstellung der Vorrichtung mit zwei Fraktioniersäulen für jede Festphasenextraktionseinheit.

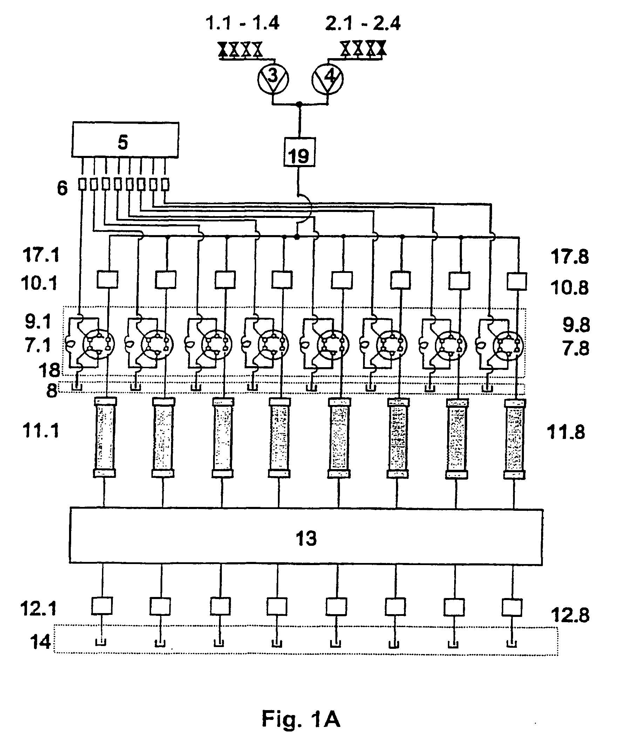

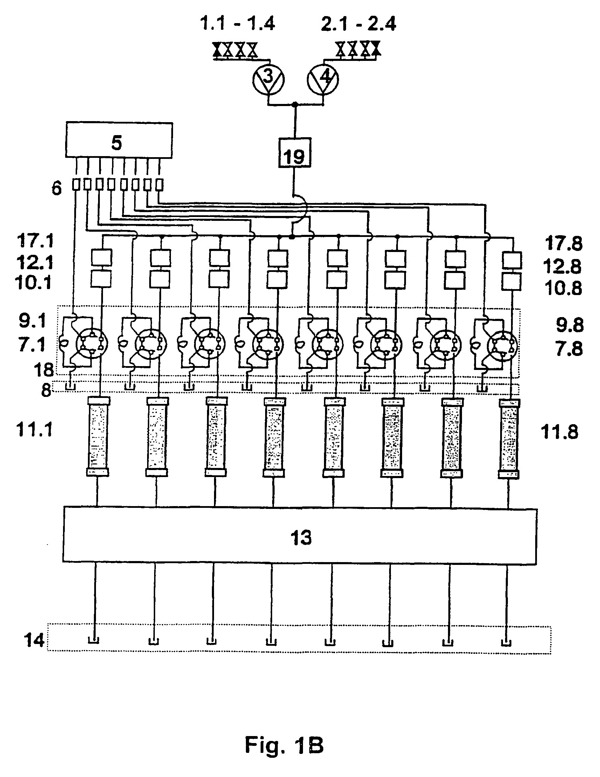

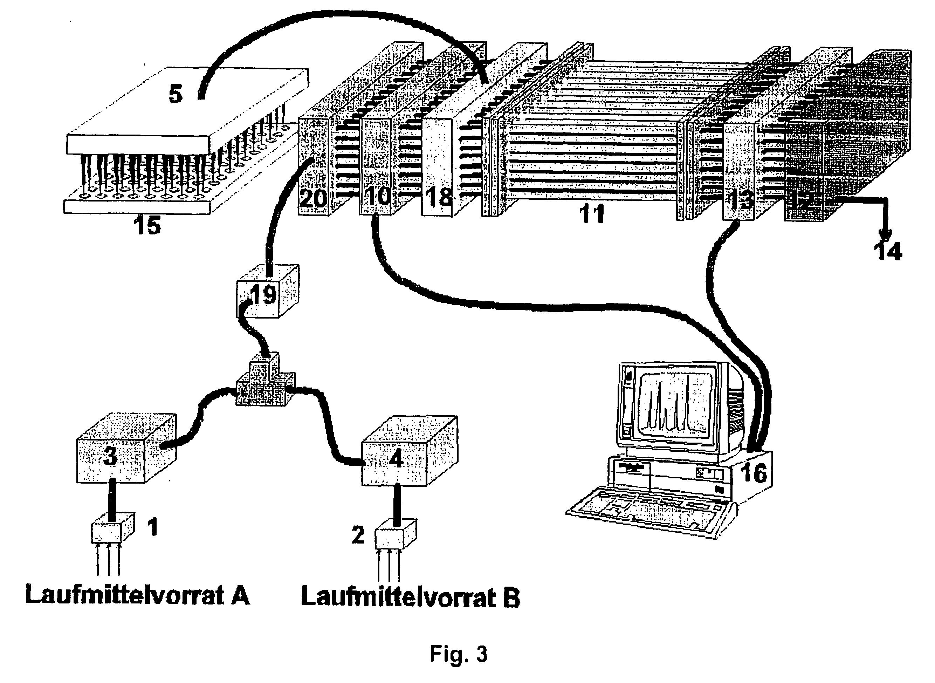

Die zu trennenden Proben befinden sich in Probengefä-βen. Gemäß einer bevorzugten Ausführung der Erfindung sind dies beispielsweise Mikrotiterplatten 15 in Fig. 3. Mittels eines multiparallelen Probeaufnahmesystemes 5, das beispielsweise als Autosampler ausgebildet sein kann, werden gleichzeitig acht Proben aufgenommen und dem Injektionssystem 18 zugeführt, das aus Injektionsports 6, Injektionsventilen 9 und Probenschleifen 7 besteht (Fig. 1A, 1B). Überflüssiges Probenmaterial gelangt durch die entsprechende Stellung des Injektionsventils 9 in den Probenabfall 8. Sind alle acht Probeaufgabeschleifen 7.1 - 7.8 befüllt, werden alle Injektionsventile 9.1 - 9.8 gleichzeitig geschaltet und auf diese Weise die mit Proben gefüllten Probenschleifen 7.1 - 7.8 mit den Trennsäulen 11.1 - 11.8 verbunden, so daß die Proben parallel und gleichzeitig auf die Trennsäulen 11.1 - 11.8 aufgegeben werden. Die Trennsäulen 11.1 - 11.8 sind in einer Trennsäulenbatterie 11 kompakt angeordnet.

Über die Ventile 1.1 - 1.4 und 2.1 - 2.4 und die Pumpen 3 und 4 wird die mobile Phase über einen Drucksensor 19, der Teil der Flussregelungseinheit ist, in die einzelnen Trennungslinien 17.1- 17.8 gefördert. Es kann sowohl ein Niederdruck- als auch ein Hochdruckgradient gefahren werden. Im Falle der Niederdruckvariante wird der Gradient in einer Mischkammer erzeugt und mit einer einzigen Pumpe gefördert. Bei Hochdruckgradientenbetrieb (vergl. Fig. 3) werden die Flußmittel mittels zweier Pumpen 3 und 4 auf der Hochdruckseite zusammengeführt. Die von den Pumpen 3 und / oder 4 geförderte mobile Phase fließt über die Verteilung 20 zum Flussregler 10 und transportiert die Proben gemäß Fig. 1A von den Probenschleifen 7 auf die jeweilige Trennsäule 11. In den Trennsäulen 11.1 - 11.8 werden auf an sich bekannte Weise die Komponenten der Proben aufgetrennt.

Nach erfolgter Trennung werden die Komponenten in einen Multikanaldetektor 13 geführt. Der Multikanaldetektor 13 kann auf dem Prinzip an sich bekannter Detektionsverfahren, wie z. B. der Ultraviolettabsorption, der Fluoreszensspektroskopie, der Lichtstreudetektion oder der Massendetektion basieren. Für jede der acht Proben nimmt der Multikanaldetektor 13 ein eigenes Chromatogramm bzw. Spektrum auf.

Dient die erfindungsgemäße Vorrichtung ausschließlich der analytischen Bestimmung, so werden anschließend die Probenreste und die mobile Phase in einen Abfall 14 überführt.

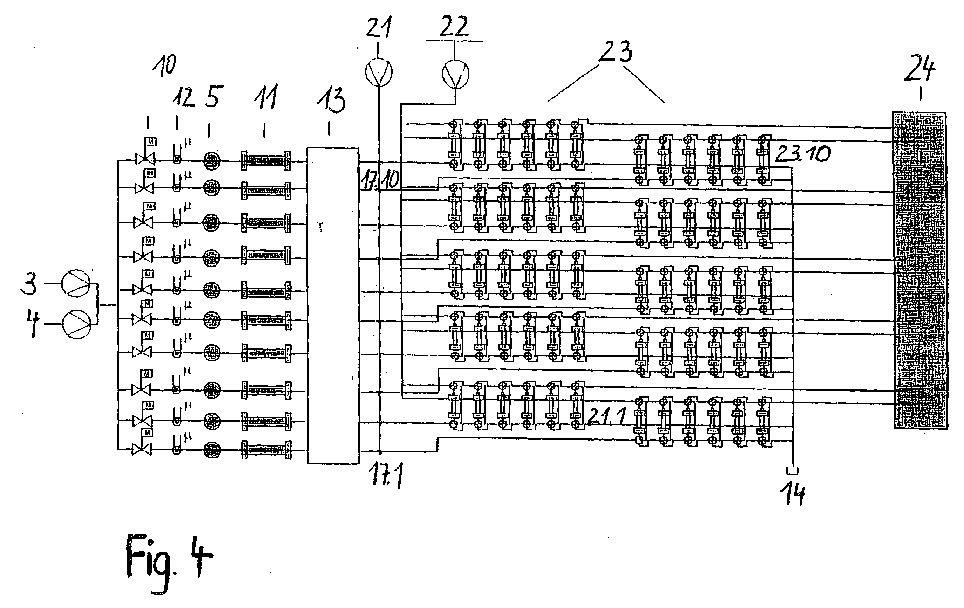

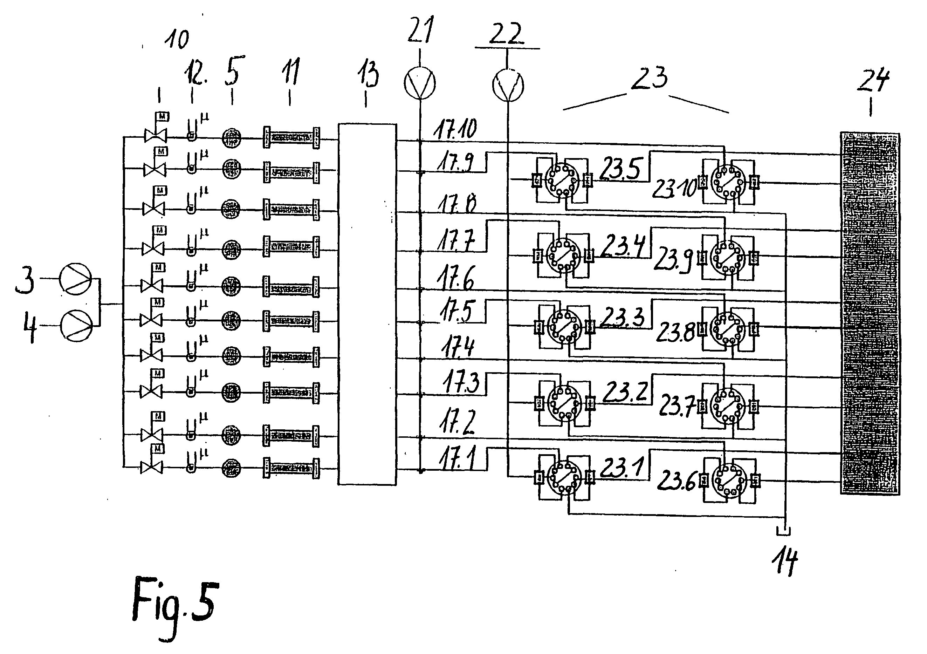

Bei einer präparativen oder semipräparativen Arbeitsweise werden die Proben nach der Trennung gesammelt und weiterverwendet. Dann wird anstelle des Abfalls 14 ein multiparalleler Fraktionssammler 24 installiert. In diesem Fall steuert ein zerstörungsfrei arbeitender Detektor, (z.B. ein multiparalleler Utraviolettabsorptionsdetektor 13 mit Peakerkennung) den Fraktionssammler, der die aufgereinigten Komponenten sammelt. Vor dem Fraktionssammler 24 kann zur Aufreinigung der Fraktionen und Überführung der Fraktionen in ein organisches Lösungsmittel eine Festphasenextraktionseinheit 23 installiert sein (s. Fig. 4, 5).

Vor allem bei analytischer Zielstellung ist häufig eine exakte Vergleichbarkeit der Chromatogramme zur eindeutigen Identifikation von getrennten Substanzen anhand der Retentionszeiten im Chromatogramm notwendig.

Für diesen Anwendungsfall ist eine Flussregelung unabdingbar.

Die Flussregelungseinheit besteht aus dem Gesamtdrucksensor 19, dem Flussregler 10 und dem Flussmesser 12. In Fig. 1A sind in jeder parallelen Trennungslinie 17.1 - 17.8 Flussregler 10 vor dem Injektionsventil 9 vorgesehen. Flussmesser 12 sind hier beispielhaft nach dem Detektor 13 angeordnet. Der erforderliche Gesamtdruckmesser 19 befindet sich zwischen den Pumpen 3, 4 und der Verteilung 20 auf die einzelnen Trennlinien.

In Fig. 1B ist eine andere beispielhafte Anordnung vorgesehen, in der die Teile Flussregler 10 und Flußmesser 12 der Flussregelungseinheit kompakt vor den Injektionsventil 9 eingefügt sind.
Ein gleicher Fluss in allen Trennsäulen 11.1 - 11.8 garantiert jedoch noch nicht die Ähnlichkeit von Chromatogrammen gleicher Proben. Geringe Unterschiede in der Art der Befüllung der Trennsäulen 11.1 - 11.8 mit stationärem Phasenmaterial, die z.B. auf unterschiedliche Füllhöhe oder Packungsdichte zurückzuführen sind, können zu unterschiedlichen Retentionszeiten für ein- und dieselbe Substanz führen. Da die Flüsse in den einzelnen parallelen Trennlinien 17.1 - 17.8 einzeln regelbar sind, können sie vorteilhafterweise und erfindungsgemäß so eingestellt werden, daß sie die geringen Unterschiede in den Trennsäulen 11.1 - 11.8 ausgleichen. Die Einstellung erfolgt so, daß eine Kalibrierkomponente auf alle Trennsäulen 11.1 - 11.8 aufgegeben wird. Die Messung der unterschiedlichen Retentionszeiten erfolgt über einen Detektor. Nach Messung der Retentionszeiten wird der Fluss für die einzelnen Trennungslinien 17.1 - 17.8 so berechnet und nachgeregelt, daß sich für die Kalibrierkomponente in allen Trennungslinien 17.1 - 17.8 die gleichen Retentionszeiten ergeben.

Die beiden Verfahren zur Einstellung eines für den Angleich von Retentionszeiten erforderlichen und vorher berechneten Flusses, ist nachfolgend näher erläutert.

### Verfahren 1 (mit druckgeregelter Fördereinheit) :

Die Flussmesser 12.1 bis 12.8 ermitteln für die jeweilige Trennlinie 17 den Wert des aktuellen Volumenstroms. Der Flussregler 10 vergleicht diesen Istwert mit einem von der Auswerte- u. Steuereinheit 16 vorgegebenen Sollwert und regelt mit der berechneten Regeldifferenz direkt den erforderlichen Volumenstrom für die jeweiligen Trennlinie 17.1 bis 17.8 ein. Neben der Sollwertvorgabe überwacht die Auswerteeinheit (16) auch die Reglerparameter.

Diese Vorgehensweise zur Einregelung der Volumenströme bei Parallelbetrieb von Trennsäulen ist bei einer Versorgung mit druckgeregelten HPLC- Pumpen möglich. Diese Versorgung mit mobiler Phase wird selten eingesetzt. Die Schwierigkeit in der Auswahl eines geeigneten Vordruckes, der abhängig von der nachfolgenden Säulenbatterie ist, macht sich hierbei bemerkbar.

In der Hochdruckflüssigchromatographie werden i. A. Pumpen mit konstanter Volumenstromförderung eingesetzt.

Hierzu Verfahren 2 (mit volumenstromgeregelter Fördereinheit) :

Die Einregelung der Volumenströme erfolgt bei Konstantvolumenstromversorgung nach einem speziellen Verfahren. Das o. g.Verfahren erlaubt das Einregeln der parallelen Volumenströme ohne eine gegenseitige Beeinflussung der Trennungslinien über den Gesamtdruck. Außerdem wird hierbei der Gesamtvolumenstrom vollständig auf die einzelnen Trennlinien verteilt. Die Volumenstromwerte werden von Flussmessern in den einzelnen Trennungslinien 17.1 - 17.8 erfaßt. Ein Gesamtdruckmesser 19 ermittelt den Druck ausgangsseitig der Pumpen 3 und 4. Das Ergebnis einer Quotientenbildung aus Gesamtdruck und aktuellem Volumenstromwert in der jeweiligen Trennlinie stellt für den Flussregler einen Istwert dar. Der Flussregler (z.B. Reglereinheit mit Ventil) 10 vergleicht diesen Istwert mit einem von der Auswerte- u. Steuereinheit 16 vorgegebenen Sollwert und regelt mit der berechneten Regeldifferenz somit indirekt den Volumentrom für die jeweilige Trennlinie 17.1 bis 17.8 ein. In einer bevorzugten Ausführung der Erfindung wird der Volumenstrom indirekt über den Druckabfall (Differenzdruck) an einer Meßkapillare ermittelt.

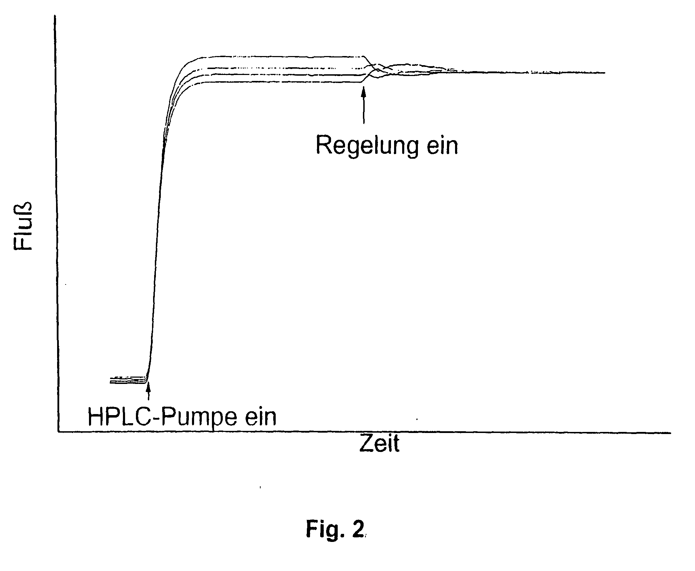

In Fig. 2 ist der Einregelungsprozeß für 4 parallele HPLC-Trennungslinien 17.1 bis 17.4 in einem Diagramm veranschaulicht. Nach dem Start der HPLC-Pumpen 3 und 4 stellt sich in jeder der vier Trennungslinien 17.1 bis 17.4 ein anderer Volumenstrom ein. Nach Einschalten der Flussregelung und Voreinstellung eines gemeinsamen Sollwertes herrscht nach einer kurzen Einschwingphase ein gleicher Volumenstroms in den Trennungslinien 17.1 bis 17.4.

Zur Angleichung der Retentionszeiten wird eine geeignete Standardsubstanz gleichzeitig in alle Trennungslinien 17 injiziert und die Retentionszeit mit Hilfe des Multikanaldetektors 13) erfaßt. Über einen speziellen Algorithmus errechnet die Auswerte- u. Steuereinheit 16 daraus die nötigen Sollwerte und gibt diese an die Flussregelungseinheit weiter. Die Retentionszeiten der Standardsubstanz werden in regelmäßigen Abständen überprüft, um gegebenenfalls die Sollwerte nachzustellen.
Vorteilhafterweise ermöglicht die Flussregelungseinheit auch eine Fehlererkennung. Über- oder unterschreitet der Stellwert des Flussreglers in einer Trennlinie 17 einen zulässigen Bereich, so wird sofort ein Systemfehler (z.B. verstopfte Säule bzw. Kapillare, Leck) erkannt und die betreffende Trennungslinie 17 wird herausgeschaltet. Die Auswerteeinheit 16 signalisiert eine entsprechende Fehlermeldung.

Die in Fig. 3 in der Perspektive dargestellte Schematik der Vorrichtung zeigt eine auf sechsundneunzig Chromatographiekanäle erweiterte Vorrichtung. Das multiparallele Probenaufnahmesystem 5 ermöglicht hier die gleichzeitige Aufnahme von 96 Proben.

Für semipräparative und präparative Anwendungen wird an die Chromatographiekanäle eine multiparallele Festphasenextraktionseinheit 23 und eine multiparallele Fraktionssammler gemäß Fig. 4 und 5 gekoppelt.

Gemäß Fig. 4 werden auf an sich bekannte Weise mittels eines multiparallelen Probeaufnahmesystemes 5, das beispielsweise als Autosampler ausgebildet sein kann, zehn Proben aufgenommen und den Trennsäulen 11.1 bis 11.10 zugeführt. Über ein Pumpsystem, bestehend aus den Pumpen 3 und 4, wird ein Lösungsmittelgemisch über einen Verteiler auf die hier dargestellten zehn Trennlinien 17.1 bis 17.10 gefördert. Zur Sicherstellung von gleichen Flüssen in allen Trennlinien 17.1 bis 17.10 sind Flußregelungseinheiten, bestehend aus den Ventilen 10 und den Flußmessern 12 und, hier nicht dargestellt, ein Druckmesser 19 sowie ein entsprechender Rechner mit Flußregelungsprogramm angeordnet. Das Lösungsmittelgemisch wird in jeder Trennlinie 17.1 bis 17.10 über das Probenaufnahmesystem 5 geführt. Anschließend werden die Proben weiter zu den Trennsäulen 11.1 bis 11.10 zu einem parallelen Multikanaldetektor 13 geführt. Über eine Pumpe 21 wird auf allen Trennlinien 17.1 bis 17.10 Wasser zugeführt, um die Polarität des Gemisches zu erhöhen und somit die Extraktion der Probenkomponenten auf der sich anschließenden Festphasenextraktionseinheit 23 zu ermöglichen. Die Festphasenextraktionseinheit 23 enthält hier pro Trennlinie 17.1 bis 17.10 sechs Fraktioniersäulen.

In der Variante gemäß Fig. 5 sind in jeder der Trennlinien 17.1 bis 17.10 zwei Fraktioniersäulen in Kombination mit einem 10-Port-2-Positionsventil vorgesehen. Die Pumpe 22 dient zur Equilibrierung der Festphasenextraktionseinheit 23 zum Reinigen der Proben und schließlich zur Überführung der Proben in den Fraktionssammler 24.

### Bezugszeichenliste

- 1.1 - 1.4: Ventil
Laufmittel
Vorrat A
- 2.1 - 2.4: Ventil
Laufmittel
Vorrat B
- 3: Pumpe
- 4: Pumpe
- 5: Probenaufnahmesystem
- 6: Injektionsport
- 7: Probenschleile
- 7.1-7.8: Probenschleifen
- 8: Probenabfall
- 9: Injektionsventil
- 9.1-9.8: Injektionsventile
- 10: Flussregler
- 11: Trennsäulen-
batterie
- 11.1 - 11.10: Trennsäulen
- 12: Flussmesser
- 13: Detektor
- 14: Abfall
- 15: Mikrotiterplatte
- 16: Auswerteu. Steuereinheit
- 17.1 -17.10: Trennungslinien
- 18: Injektionssystem
- 19: Gesamtdruckmesser
- 20: Verteiler
- 21: Pumpe
- 22: Pumpe
- 23: Festphasenextraktionseinheit (23.1-23.10
- 24: Fraktionssammler

## Patentansprüche

1. Vorrichtung zur flüssigchromatographischen Trennung von Substanzen unter Druck, bei der mindestens mehrere parallel verlaufend angeordnete flüssigchromatographische Trennungslinien (17) von einer einzigen Fördereinheit in Form von ein oder zwei Pumpen (3, 4) versorgt werden und im Bereich der Probenzuführung mit einem Probenaufnahmesystem (5) und einem Injektionssystem (18) sowie im Detektionsbereich mit einem Detektor (13), verbunden mit einer Auswerte- u.Steuereinheit (16), kombiniert sind,
**dadurch gekennzeichnet,**
**daß** jede flüssigchromatographische Trennungslinie (17) eine separate Flussregelungseinheit (10, 12, 19) aufweist, wobei die Flussregelungseinheiten (10,12,19) aus einem Flussregler (10.1 - 10.8), einem Gesamtdruckmesser (19) und einem Flussmesser (12.1 - 12.8) bestehen.

2. Vorrichtung nach Anspruch 1,
**dadurch gekennzeichnet,**
**daß** die Flußregelungseinheiten (10,12,19) in jeder Trennungslinie (17) soft- und/oder hardwaremäßig steuerbar sind.

3. Vorrichtung nach den Ansprüchen 1 oder 2,
**dadurch gekennzeichnet,**
**daß** Flussregler (10) und Flussmesser (12) in einer Trennungslinie (17) an verschiedenen Orten angeordnet sind.

4. Vorrichtung nach den Ansprüchen 1 oder 2,
**dadurch gekennzeichnet,**
**daß** Flussregler (10) und Flussmesser (12) in den Trennungslinien (17) kompakt an einem Ort angeordnet sind.

5. Vorrichtung nach den Ansprüchen 1 bis 4,
**dadurch gekennzeichnet,**
**daß** die Flussregelungseinheit (10,12,19) vor
oder hinter den Trennsäulen (11.1 - 11.8) angeordnet ist.

6. Vorrichtung nach den Ansprüchen 1 bis 5,
**dadurch gekennzeichnet,**
**daß** der Gesamtdruckmesser (19) ausgangs der Pumpen (3, 4) angeordnet ist.

7. Vorrichtung nach einem der Ansprüche 1 bis 6,
**dadurch gekennzeichnet,**
**daß** das Probenaufnahmesystem (5) mit mindestens mehreren parallelen Probeaufnahmelinien über mindestens mehrere Injektionsports (6) und
Injektionsventile (9) und Probenschleifen (7) des multiparallelen Injektionssystems (18) mit mindestens mehreren Trennsäulen (11.1 - 11.8) verbunden sind, die mit einem Detektor (13) gekoppelt sind, der mindestens mehrere Bestimmungskanäle aufweist.

8. Vorrichtung nach einem der Ansprüche 1 bis 7,
**dadurch gekennzeichnet,**
**daß** die Trennsäulen (11.1 - 11.8) zu einer Trennsäulenbatterie (11) kompakt vereinigt sind.

9. Vorrichtung nach einem der Ansprüche 1 bis 8,
**dadurch gekennzeichnet,**
**daß** jedes Injektionsventil (9) vor den Trennsäulen (11.1 - 11.8) angeordnet ist.

10. Vorrichtung nach einem der Ansprüche 1 bis 9,
**dadurch gekennzeichnet,**
**daß** jedes Injektionsventil (9) als Mehrwegventil ausgebildet ist.

11. Vorrichtung nach einem der Ansprüche 1 bis 10,
**dadurch gekennzeichnet,**
**daß** jedes Injektionsventil (9.1-9.8) Schaltmöglichkeiten zu einem Injektionsport (6), zu einer Probenschleife (7), zu den Pumpen (3, 4), zu einem Abfall (8) und zu einer Trennsäule (11.1 - 11.8) aufweist.

12. Vorrichtung nach einem der Ansprüche 1 bis 11,
**dadurch gekennzeichnet,**
**daß** die Trennungslinien (17.1-17.10) eine Trennsäule und eine Festphasenextraktionseinheit (23) aufweisen, die mit weiteren Pumpen (21, 22) gekoppelt ist.

13. Vorrichtung nach Anspruch 12,
**dadurch gekennzeichnet, daß**
im Endbereich der Festphasenextraktionseinheit (23) ein mit der Festphasenextraktionseinheit (23), der multiparallelen Fraktionsausgabeeinheit (24) und dem Abfall (14) eine Verbindung herstellbares Mehr-' Wege-Ventil angeordnet ist.

14. Vorrichtung nach Anspruch 12 oder 13,
**dadurch gekennzeichnet, daß**
die Festphasenextraktionseinheiten (23) mindestens je zwei Fraktioniersäulen aufweisen.

15. Vorrichtung nach einem der Ansprüche 12 bis 14,
**dadurch gekennzeichnet, daß**
die Festphasenextraktionseinheiten (23) je zwischen 10 und 50 Fraktioniersäulen aufweisen.

16. Verfahren zur flüssigchromatographischen Trennung von Substanzen unter Druck, bei dem mehrere zu trennende Proben gleichzeitig mindestens mehreren Trennsäulen (11) zugeführt werden und anschließend gleichzeitig und parallel eine Detektion und Auswahl erfolgt
**dadurch gekennzeichnet,**
**daß** die Trennungslinien (17) bezüglich der Retentionszeiten mittels einer Kalibrierprobe kalibriert werden und nach Ermittlung der einzelnen Retentionszeiten durch Steuerung von Flussreglern (10) aufgrund von Daten von Flussmessern (12) und Ausgangsdruckmesser (19) für alle Proben die gleiche Retentionszeit eingestellt wird.

17. Verfahren nach Anspruch 16,
**dadurch gekennzeichnet,**
**daß** der Quotient aus Gesamtdruck und Volumenstrom der jeweiligen Trennungslinie als Istwert für eine indirekte Regelung des Volumenstromes herangezogen wird.

## Claims

1. An apparatus for the liquid chromatographic Separation of substances under pressure, for which at least several liquid chromatographic separating lines (17), which are disposed in parallel, are supplied by a single pumping unit in the form of one or two pumps (3, 4) and, in the region, when the samples are supplied, are combined with a sample holding System (5) and an injection System (18) as well as, in the detection region, with a detector (13), connected with an evaluation and control unit (16), wherein the liquid chromatographic separation lines (17) have a separate flow control unit (10, 12, 12.1, 19), the flow regulating units (10, 12, 19) consisting of a flow controller (10.1 - 10.8), a total pressure meter (19) and flow meters (12.1 - 12.8).

2. The apparatus of claim 1, wherein the flow regulating units (10, 12, 19) in each separating line (17) can be controlled by software and/or hardware.

3. The apparatus of claims 1 or 2, wherein flow regulators (10) and flow meters (12) are disposed at different places in a separating line (17).

4. The apparatus of claims 1 or 2, wherein flow regulators (10) and flow meters (12) are disposed compactly in one place in the separating line (17).

5. The apparatus of claims 1 to 4, wherein the flow regulator unit (10, 12, 19) is disposed in front of or behind the separating columns (11.1 to 11.8).

6. The apparatus of claims 1 to 5, wherein the total pressure meter (19) is disposed on the output side of the pump (3, 4).

7. The apparatus of one of the claims 1 to 6, wherein the sample holding System (5) is connected with at least several parallel sample holding lines over at least several injection ports (6) and injection valves (9) and sample loops (7) of the multi-parallel injection System (18) are connected with at least several separating columns (11.1 to 11.8), which are coupled with a detector (13), which has several determination channels.

8. The apparatus of one of the claims 1 to 7, wherein the separating columns (11.1 to 11.8) are combined compactly into a battery of separating columns (11).

9. The apparatus of one of the claims 1 to 8, wherein each injection valve (9) is disposed before the separating columns (11.1 to 11.8).

10. The apparatus of one of the claims 1 to 9, wherein each injection valve (9) is constructed as a multiple way valve.

11. The apparatus of one of the claims 1 to 10, wherein each injection valve (9.1 to 9.8) has switching possibilities to an injection port (6), to a sample loop (7), to the pumps (3, 4), to a waste collector (8) and to a separating column (11.1 to 11.8).

12. The apparatus of one of the claims 1 to 11,
wherein the separating lines (17.1 to 17.10) have a separating column and a solid phase extraction unit (13), which are coupled with further pumps (21, 22).

13. The apparatus of claim 12, wherein a multiple way valve, which can be connected with the solid phase extraction unit (23), the multi-parallel fraction output unit (24) and the waste collector (14), is disposed in the end region of the solid phase extraction unit (23).

14. The apparatus of one of the claims 12 or 13, wherein the solid phase extraction units (23) have at least two fractionating columns each.

15. The apparatus of one of the claims 12 to 14, wherein the solid phase extraction units (23) have between 10 and 50 fractionating columns.

16. A method for the liquid chromatographic separation of substances under pressure, for which several samples, which are to be separated, are supplied simultaneously to at least several separating columns (11) and, subsequently, a detection and selection takes place simultaneously and in parallel, wherein the separating lines (17) are calibrated with respect to the retention times by means of a calibration sample and, after the individual retention times have been determined, are adjusted to the Same retention time by control with flow regulators (10) an the basis of data from flow meters (12) and initial pressure meters (19).

17. The method of claim 16, wherein the ratio of the total pressure to the volume flow to the respective separating line is used as actual value for indirectly controlling the volume flow.

## Revendications

1. Dispositif de séparation par chromatographie en phase liquide de substances sous pression, dans lequel au moins plusieurs lignes de séparation (17) par chromatographie en phase liquide disposées de façon parallèle sont alimentées par une unité d'extraction unique sous la forme d'une ou de deux pompes (3, 4) et sont combinées dans la zone de l'amenée d'échantillons avec un système de réception d'échantillons (5) et un système d'injection (18) ainsi que, dans la zone de détection, avec un détecteur (13) raccordé à une unité d'analyse et de commande (16)
**caractérisé en ce**
**que** chaque ligne de séparation (17) par chromatographie en phase liquide présente une unité séparée de régulation du flux (10, 12, 19), les unités de régulation du flux (10, 12, 19) étant composées d'un régulateur de flux (10.1 - 10.8), d'un manomètre global (19) et d'un débitmètre (12.1 - 12.8).

2. Dispositif selon la revendication 1,
**caractérisé en ce**
**que** les unités de régulation du flux (10, 12, 19) dans chaque ligne de séparation (17) peuvent être commandées au plan logiciel et/ou matériel.

3. Dispositif selon les revendications 1 ou 2,
**caractérisé en ce**
**que** le régulateur de flux (10) et le débitmètre (12) dans une ligne de séparation (17) sont disposés dans différents endroits.

4. Dispositif selon les revendications 1 ou 2,
**caractérisé en ce**
**que** le régulateur de flux (10) et le débitmètre (12) dans les lignes de séparation (17) sont disposés de façon compacte dans un endroit.

5. Dispositif selon les revendications 1 à 4,
**caractérisé en ce**
**que** l'unité de régulation du flux (10, 12, 19) est disposée devant ou derrière les colonnes de séparation (11.1 - 11.8).

6. Dispositif selon les revendications 1 à 5,
**caractérisé en ce**
**que** le manomètre global (19) est disposé à la sortie des pompes (3, 4).

7. Dispositif selon une des revendications 1 à 6,
**caractérisé en ce**
**que** le système de réception d'échantillons (5) est raccordé à au moins plusieurs lignes de réception d'échantillons parallèles via au moins plusieurs orifices d'injection (6), et en ce que des soupapes d'injection (9) et des boucles d'échantillons (7) du système d'injection (18) multiparallèle sont raccordées à au moins plusieurs colonnes de séparation (11.1 - 11.8) qui sont couplées à un détecteur (13) qui présente au moins plusieurs canaux de destination.

8. Dispositif selon une des revendications 1 à 7,
**caractérisé en ce**
**que** les colonnes de séparation (11.1 - 11.8) sont réunies de façon compacte pour former une batterie de colonnes de séparation (11).

9. Dispositif selon une des revendications 1 à 8,
**caractérisé en ce**
**que** chaque soupape d'injection (9) est disposée devant les colonnes de séparation (11.1 - 11.8).

10. Dispositif selon une des revendications 1 à 9,
**caractérisé en ce**
**que** chaque soupape d'injection (9) est constituée sous forme de soupape multivoie.

11. Dispositif selon une des revendications 1 à 10,
**caractérisé en ce**
**que** chaque soupape d'injection (9.1 - 9.8) présente des possibilités de commutation vers un orifice d'injection (6), vers une boucle d'échantillons (7), vers les pompes (3, 4), vers un rebut (8) et vers une colonne de séparation (11.1 - 11.8).

12. Dispositif selon une des revendications 1 à 11,
**caractérisé en ce**
**que** les lignes de séparation (17.1-17.10) présentent une colonne de séparation et une unité d'extraction de phases solides (23) qui est couplée à d'autres pompes (21, 22).

13. Dispositif selon la revendication 12,
**caractérisé en ce**
**que**, dans la zone extrême de l'unité d'extraction de phases solides (23), il est disposé une vanne multivoie établissant une liaison avec l'unité d'extraction de phases solides (23), l'unité multiparallèle de sortie de fractions et le rebut (14).

14. Dispositif selon la revendication 12 ou 13,
**caractérisé en ce**
**que** les unités d'extraction de phases solides (23) présentent au moins deux colonnes de fractionnement chacune.

15. Dispositif selon une des revendications 12 à 14,
**caractérisé en ce**
**que** les unités d'extraction de phases solides (23) présentent chacune entre 10 et 50 colonnes de fractionnement.

16. Procédé de séparation par chromatographie en phase liquide de substances sous pression, dans lequel plusieurs échantillons à séparer sont conduits simultanément à au moins plusieurs colonnes de séparation (11) et dans lequel il se produit ensuite une détection et une sélection de façon simultanée et parallèle,
**caractérisé en ce**
**que** les lignes de séparation (17) sont calibrées en ce qui concerne les temps de rétention au moyen d'un échantillon de calibrage et, après la détermination des différents temps de rétention, par commande de régulateurs de flux (10), sur la base de données de débitmètres (12) et de manomètre de sortie (19), le même temps de rétention est réglé pour tous les échantillons.

17. Dispositif selon la revendication 16,
**caractérisé en ce**
**que** le quotient de la pression globale et du flux volumique de la ligne de séparation respective est utilisé comme valeur effective pour une régulation indirecte du flux volumique.
